# FASCICULE DE BREVET EUROPEEN

(11) **EP 1 836 380 B1**
(45) Date de publication et mention de la délivrance du brevet: **01.07.2009**
(21) Numéro de dépôt: 04805512.3
(22) Date de dépôt: 23.11.2004
(51) Int. Cl.: F01N 9/00, F01N 3/023, F01N 3/035, F01N 3/08

(54) **PROCEDE ET DISPOSITIF DE REGENERATION D'UN FILTRE A PARTICULES INTEGRE DANS UNE LIGNE D'ECHAPPEMENT D'UN MOTEUR A COMBUSTION INTERNE**
VERFAHREN UND VORRICHTUNG ZUR REGENERATION EINES IN EINER ABGASLEITUNG EINES VERBRENNUNGSMOTORS INTEGRIERTEN PARTIKELFILTERS
METHOD AND DEVICE FOR REGENERATING A PARTICLE FILTER INTEGRATED INTO AN EXHAUST LINE OF AN INTERNAL COMBUSTION ENGINE

(30) Priorité: 24.11.2003 FR 0313835
(43) Date de publication de la demande: 26.09.2007
(73) Titulaire: Institut Français du Pétrole, 92852 Rueil Malmaison Cedex (FR); Peugeot Citroën Automobiles S.A., 78140 Vélizy Villacoublay (FR)
(72) Inventeur: NOIROT, Rémi, 58000 Nevers (FR); CASTAGNÉ, Michel, 78480 Verneuil sur Seine (FR); DEMENTHON, Jean-Baptiste, 75011 Paris (FR)
(86) Numéro de dépôt international: PCT/FR2004/002983
(87) Numéro de publication internationale: WO 2005/052331

(56) Documents cités:
- EP-A- 0 405 310
- FR-A- 2 825 412
- FR-A- 2 829 526
- US-A- 4 450 682
- US-A- 4 651 524
- US-A- 5 195 319
- PATENT ABSTRACTS OF JAPAN vol. 017, no. 558 (M-1493), 7 octobre 1993 (1993-10-07) & JP 05 156929 A (TOYOTA MOTOR CORP), 22 juin 1993 (1993-06-22)

## Description

La présente invention se rapporte à un procédé et à un dispositif de régénération d'un filtre à particules intégré dans une ligne d'échappement d'un moteur à combustion interne, notamment dé type Diesel.

Elle concerne plus particulièrement, un procédé et un dispositif permettant de réguler le dégagement de chaleur, ou exotherme, du filtre à particules.

Généralement, un filtre à particules est utilisé pour capturer les particules et suies contenues dans les gaz d'échappement et éviter leurs rejets dans l'atmosphère. Ces particules et suies ont cependant la propriété de colmater le filtre après une certaine durée d'utilisation et d'entraîner une augmentation de la contre-pression régnant dans la ligne d'échappement, ce qui peut provoquer un dysfonctionnement du moteur.

Il est connu que, dés que ce filtre a atteint un taux prédéterminé de colmatage, une séquence de régénération de ce filtre soit déclenchée, généralement par le contrôle moteur. Cette séquence de régénération consiste, pour l'essentiel, à brûler les particules et suies présentes dans ce filtre. Pour ce faire, il est prévu d'élever temporairement la température des gaz d'échappement qui traversent le filtre pour aider à la combustion de ces particules, cette combustion étant généralement exothermique. La durée de cette élévation de température des gaz est fonction de l'augmentation de la contre-pression des gaz dans la ligne d'échappement.

Une des méthodes pour élever cette température consiste à faire fonctionner le moteur en mode pauvre, c'est à dire à une richesse inférieure à 1, de manière à ce que l'oxygène présent dans lés gaz d'échappement participe également à la combustion des particules et suies contenues dans le filtre.

Cependant, la combustion à l'intérieur du filtre est incontrôlable, ce qui peut amener des températures très élevées à l'intérieur de celui-ci. Ces températures peuvent provoquer une dégradation du matériau constitutif du filtre, voire une destruction de celui-ci.

Le problème est d'autant plus important lorsque d'autres fonctions sont implantées dans ce filtre. Notamment, il est envisagé d'utiliser le filtre en tant que support de catalyseurs, comme du platine ou du rhodium, pour convertir les polluants gazeux présents dans les gaz d'échappement, tels que les oxydes de carbone (CO), les hydrocarbures imbrûlés (HC) ou les oxydes nitriques (NOx). Dans cette configuration, lors de la régénération du filtre à particules catalysé, l'exotherme interne de ce filtre est accru par la conversion catalytique non seulement des CO et HC des gaz d'échappement mais aussi des HC qui désorbent de la structure interne des particules et des CO qui résultent de la combustion de ces particules et suies. Ceci a pour inconvénient d'entraîner une dégradation des phases catalytiques présentes sur ce filtre qui ne peuvent plus exercer leurs rôles de conversion des phases gazeuses polluantes présentes dans les gaz d'échappement.

Il est déjà connu par le documents FR 2 829 526 de surveiller la température du filtre à particules par un capteur de température disposé dans ce filtre ou en aval de celui-ci. Lorsqu'un seuil de température est atteint, il est prévu de limiter la combustion des particules et suies, voire de l'arrêter, grâce à une réduction de la concentration de l'oxygène présent dans les gaz d'échappement qui traversent ce filtre.

Une telle disposition bien que donnant satisfaction présente l'inconvénient non négligeable de ne pas obtenir une représentation réelle des différentes températures régnant dans différentes régions du filtre, principalement lorsque le capteur de température est disposé en aval du filtre. En effet, en cas d'élévation localisée de température au sein du filtre, le capteur situé en aval du filtre ne peut pas releveur une telle augmentation et la régénération se poursuit en risquant d'entraîner une dégradation localisée du filtre. De même, le capteur situé à l'intérieur du filtre ne peut permettre de relever la température que dans un endroit bien particulier du filtre.

Il est également connu par US 4 450 682 de disposer de plusieurs capteurs dans le corps du filtre pour surveiller la température dans différentes régions du filtre. Ces capteurs permettent ainsi de commander le chauffage du filtre et d'interrompre la régénération du filtre lorsque les températures détectées sont excessives.

L'inconvénient majeur de tels dispositifs est d'interrompre la régénération du filtre alors que les particules contenues dans le filtre peuvent n'avoir pas été totalement éliminées par combustion.

La présente invention se propose de remédier aux inconvénients mentionnées ci-dessus grâce à une gestion simple et efficace de l'exotherme du filtre à particules même lorsque celui-ci est catalysé toute en permettant une régénération maximale de ce filtre.

A cet effet, la présente invention propose un procédé de régénération d'un filtre à particules intégré dans une ligne d'échappement d'un moteur à combustion interne, les gaz d'échappement traversant le filtre d'une face d'entrée vers une face de sortie, caractérisé en ce que, pendant la régénération du filtre, on surveille la température interne d'au moins deux régions du filtre, on diminue la teneur en oxygène des gaz d'échappement lorsque au moins une des températures surveillées est supérieure à une température critique, on augmente la teneur en oxygène des gaz d'échappement, pour poursuivre la régénération du filtre, lorsque toutes les températures surveillées sont inférieures à la température critique.

Avantageusement, on peut surveiller la température interne d'une région du filtre proche de sa face d'entrée.

On peut également surveiller la température interne d'une région du filtre proche de face de sortie.

On peut aussi surveiller la température interne d'une région médiane du filtre.

Lorsqu'une désulfatation d'un piège à NOx est réalisée, on peut surveiller la température interne d'au moins deux régions du filtre après la désulfatation du piège.

De manière préférentielle, on peut diminuer la teneur en oxygène des gaz d'échappement par un fonctionnement du moteur en mode riche.

La teneur en oxygène des gaz d'échappement peut être augmentée par un fonctionnement du moteur en mode pauvre.

L'invention concerne également un dispositif pour la mise en oeuvre du procédé de régénération du filtre à particules précité, caractérisé en ce qu'il comprend au moins deux capteurs de température logés à l'intérieur du filtre et connectés à une unité de contrôle commandant la diminution ou l'augmentation de la teneur en oxygène des gaz d'échappement en fonction des températures relevées dans le corps du filtre par lesdits capteurs.

Préférentiellement, un capteur de température peut être placé au voisinage de la face d'entrée du filtre.

De même, un capteur de température peut être placé au voisinage de la face de sortie du filtre.

De manière avantageuse, un capteur de température peut être placé dans une région médiane du filtre.

Le filtre à particules peut comprendre des phases catalytiques pour le traitement des polluants contenus dans les gaz d'échappement

Les autres caractéristiques et avantages de l'invention apparaîtront mieux à la lecture de la description qui va suivre, donnée uniquement à titre illustratif et nullement limitatif, en se référant aux dessins annexés sur lesquels :
- la figure 1 montre schématiquement un filtre à particules régénérable selon l'invention;
- la figure 2 est une vue schématique d'un moteur à combustion interne utilisant le filtre à particules de la figure 1 ;
- la figure 3 est un organigramme montrant les différentes étapes de régénération du filtre;
- La figure 4 est une variante de la figure 2 et
- la figure 5 est un graphique montrant les variations de richesse (R) en fonction du temps (t) lors de la régénération du filtré utilisé dans la figure 4.

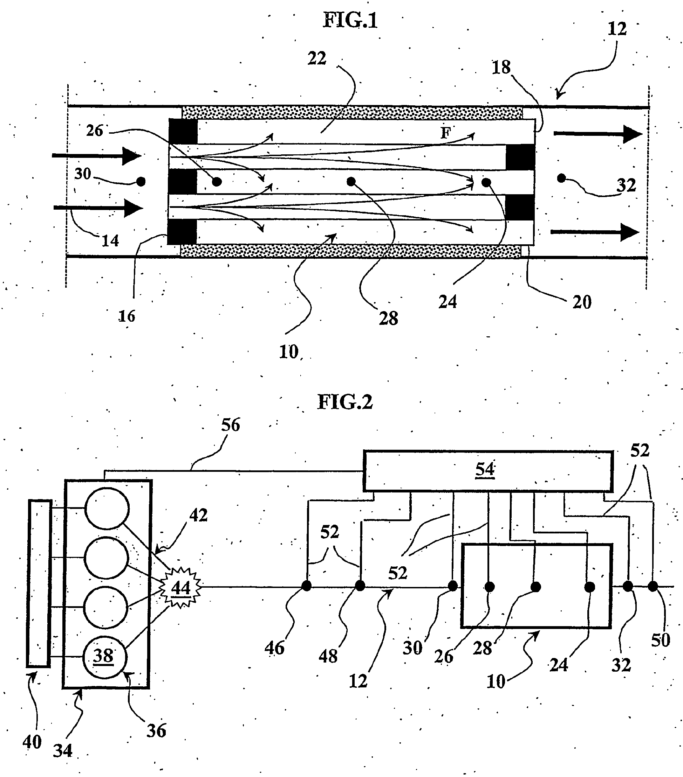

Sur la figure 1, le filtre à particules 10 est logé dans une ligne d'échappement 12. Ce filtre est traversé par les gaz d'échappement 14 qui circulent, comme indiqué par les flèches, de la face d'entrée 16 du filtre vers sa face de sortie 18. Comme cela est connu en soi, le filtre est constitué d'un monolithe 20 comportant des canaux 22 disposés dans le sens de circulation des gaz 14. A titre, d'exemple et comme visible, sur la figure 1, certains dés canaux sont obstrués sur la face d'entrée 16 alors que d'autres sont obstrués sur la face de sortie 18 de façon à obtenir une circulation des gaz d'échappement dans ce filtre, comme illustrée par les flèches. F.

Bien entendu et cela sans sortir du cadre de l'invention, les canaux 22 de ce monolithe peuvent être revêtus de phases catalytiques pour la conversion des phases gazeuses polluantes des gaz d'échappement, comme le CO, les HC ou les NOx.

Compte tenu du volume important du filtre à particules, qui peut être supérieure à 3 litres, de l'hétérogénéité des dépôts de particules et suies le long des canaux 22 et, de ce fait, de la combustion de ces particules lors de la régénération du filtre, il est prévu de surveiller la température interne de ce filtre dans au moins deux régions.

En pratique, plusieurs capteurs de température sont, disposés à l'intérieur du filtre pour surveiller ces températures et, de préférence, dans un des canaux 22.

Plus précisément, il est prévu un capteur de température 24, dit capteur aval, placé dans une région à courte distance, de l'ordre de 3 cm; de la face de sortie 18. Ce capteur permet de contrôler la température interne du filtre avec un gradient longitudinal de température inférieur à 200°C. C'est généralement à cet endroit que se situe le maximum de température résultant de la combustion des particules et suies. De plus, en cas d'utilisation d'un filtré à particules revêtu de phases catalytiques, c'est également à cet endroit que le maximum de température résultant de la combustion des particules est encore augmenté par la conversion catalytique des polluantes des gaz d'échappement, comme le CO ét/ou lés HC.

Un capteur de température 26, dit capteur amont; est situé dans une autre région du filtre et à distance axiale du capteur aval. Ce capteur est logé dans une région se situant à courte distance, également de l'ordre de 3 cm, de la face d'entrée 16 du filtre. Ce capteur permet de réguler le gradient thermique interne du filtre avec une amplitude inférieure à 100°C. A cet endroit, se concentre l'exotherme du filtre correspondant principalement à la catalyse des phases polluantes de type CO, HC ou NOx, lorsque ce filtre est catalysé.

Un capteur de température 28, dit capteur central; est positionné sensiblement dans la zone centrale du filtre. Ce capteur permet de renseigner le gradient de température avec une amplitude inférieure à quelques dizaines de degrés.

Avantageusement, un capteur de température 30 en amont du filtre ainsi qu'un capteur de température 32 en aval de ce filtre sont également prévus.

En se rapportant à la figure 2, ce filtre et ces capteurs sont implantés dans la ligne d'échappement 12 d'un moteur à combustion interne 34, notamment de type Diesel.

Ce moteur comprend au moins un cylindre 36 avec une chambre de combustion 38, des moyens d'alimentation en carburant 40 pour les chambres de combustion et des moyens d'échappement des gaz brûlés 42 raccordés à la ligne d'échappement 12. Avantageusement, un dispositif de suralimentation 44, tel qu'un turbocompresseur, peut être disposé entre la sortie des gaz d'échappement du moteur et le filtre à particules 10.

La ligne d'échappement comprend également une sonde λ 46, en amont du filtre, servant à mesurer la valeur des gaz d'échappement, un capteur de pression 48 des gaz d'échappement disposé en amont du filtre et un autre capteur de pression des gaz 50 disposé en aval du filtre à particules. Les capteurs de pression servent à mesurer la chute de pression des gaz d'échappement entre, l'entrée 16 et la sortie 18 du filtre à particules 10.

Les différents capteurs et sonde sont connectés par des lignes 52 à une unité de contrôle 54, dite contrôle moteur. Cette unité est également reliée au moteur par une ligne bidirectionnelle 56 pour connaître à tout instant les informations lisées au fonctionnement du moteur, comme le régime moteur. L'unité 54 transmet aussi par la ligne 56, après traitement des signaux reçus des capteurs et sonde, des commandes, aux différents organes du moteur qui permettent d'influencer la marche du moteur, comme l'injection de carburant 40 et/ou l'admission d'air (non représentée).

Pour évaluer l'état de la charge en particules présentes dans le filtre à particules 10, l'unité 54 reçoit des signaux représentatifs de la pression en amont et en aval du filtre 10 grâce aux capteurs de pression 48 et 50. Cette unité calcule la perte de charge en pression des gaz d'échappement entre l'amont et l'aval du filtre à particules 10 et évalue le taux de colmatage du filtre, par exemple par l'intermédiaire d'un modèle mémorise dans l'unité 54. Si ce taux atteint une valeur seuil-, la séquence de régénération du filtré à particules est enclenché et l'unité de contrôle envoie des instructions par la ligne 56 à certains organes du moteur 34 pour que ce moteur passe en mode de combustion pauvre avec une augmentation de richesse déterminée inférieure à 1. A titre d'exemple, la richesse des gaz d'échappement est telle qu'elle ne dépasse pas la richesse de 0,95, tout en ayant une composition oxydante pour consumer les dépôts de particules et de suie présentes dans ce filtre. Ceci peut se réaliser par une post-injection de carburant dans les chambres de combustion 38 des cylindres 34 par l'intermédiaire des moyens d'alimentation en carburant 40. Cette augmentation de richesse permet d'augmenter la température des gaz d'échappement pour qu'elle atteigne une température voisine de 4.50°C afin d'assurer la régénération du filtre à particules.

Bien entendu, ce seuil de colmatage peut être déterminer par tous autres moyens, comme des modèles tenant compte de la distance parcourue par le véhicule depuis la dernière dégénération ou la durée du fonctionnement, du filtre.

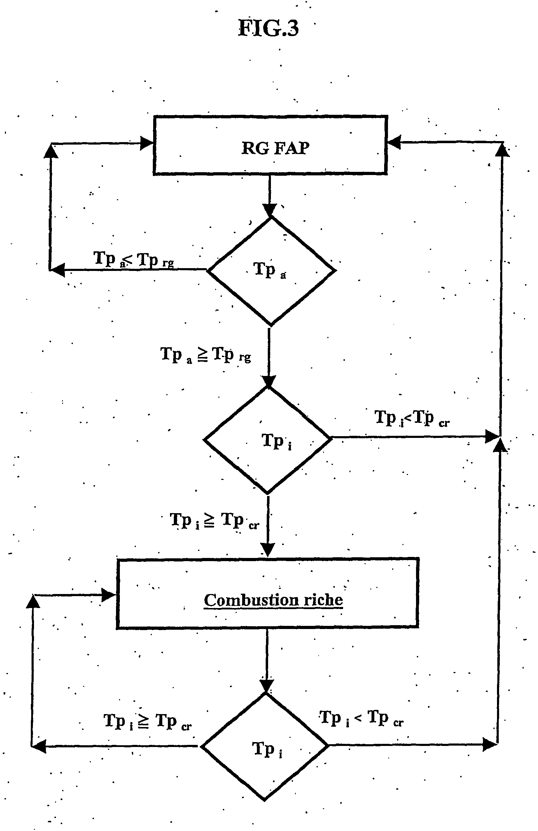

A partir de cet instant et en se rapportant à la figure 3, l'unité de contrôle 54 déclenche la séquence de régénération du filtre à particules [RG FAP]. A partir de cette étape, l'unité vérifie, par le capteur 30, si la température des gaz en amont du filtre [Tpₐ] correspond à la température nécessaire à la régénération du filtre [Tp_{rg}] pour assurer la combustion des particules présentes dans le filtre, et, par la sonde 46, si la richesse des gaz d'échappement est celle requise pour obtenir cette température. Dans la négative, l'unité envoie des instructions aux organes du moteur, tels que l'injection dé carburant, pour obtenir cette température et cette richesse. Si la température [Tpₐ] en amont du filtre est égale où supérieure à celle de la régénération [Tp_{rg}], l'unité va examiner les température internés des différentes régions du filtre [Tpᵢ], grâce aux capteurs internes 24, 26 et 28. Si aucune de ces températures internes n'atteint le seuil de température critique [Tp_{cr}], la régénération du filtre se poursuit avec les paramètres définis. Si l'une au moins de ces températures atteint ou dépasse le seuil critique [Tp_{cr}], l'unité 54 commande les organes du moteur par la ligne 56 de manière à ce que la combustion dans le moteur passe en mode riche avec une richesse supérieure à 1 (par exemple 1,05) entraînant une diminution de la concentration d'oxygène dans les gaz d'échappement. Ceci a pour effet de réduire la quantité l'oxygène qui a la possibilité d'être brûlé avec les particules et fait baisser les températures internes du filtre.

Après cette étape, si toutes les températures internes [Tpᵢ] du filtre relevées par les capteurs 24, 26, 28 sont en dessous du seuil de température critique [Tp_{cr}], alors la régénération du filtre se poursuit en passant en mode de combustion pauvre du moteur avec une richesse telle que défini lors du lancement de la phase de régénération du filtre [RG FAP]. Si au moins l'une des températures internes [Tpᵢ] est supérieure à ce seuil, l'unité 54 agira par la ligne 56 sur les organes du moteur de façon à ce que la richesse augmente encore plus en réduisant la concentration d'oxygène des gaz traversant le filtre, ce qui permettra de calmer voire arrêter la, combustion des particules et suies dans le filtre pour obtenir des températures appropriées dans toutes les régions du filtre.

Ainsi, lors de la séquence de régénération du filtre qui dure quelques minutes, l'on retrouvera une, succession de mode de combustion riche/pauvre du moteur permettant de contrôler l'exotherme de ce filtre.

Bien entendu, ce contrôle de l'exotherme lors de la régénération du filtre pourra s'appliquer aussi bien à un filtre non catalysé qu'à un filtre catalysé.

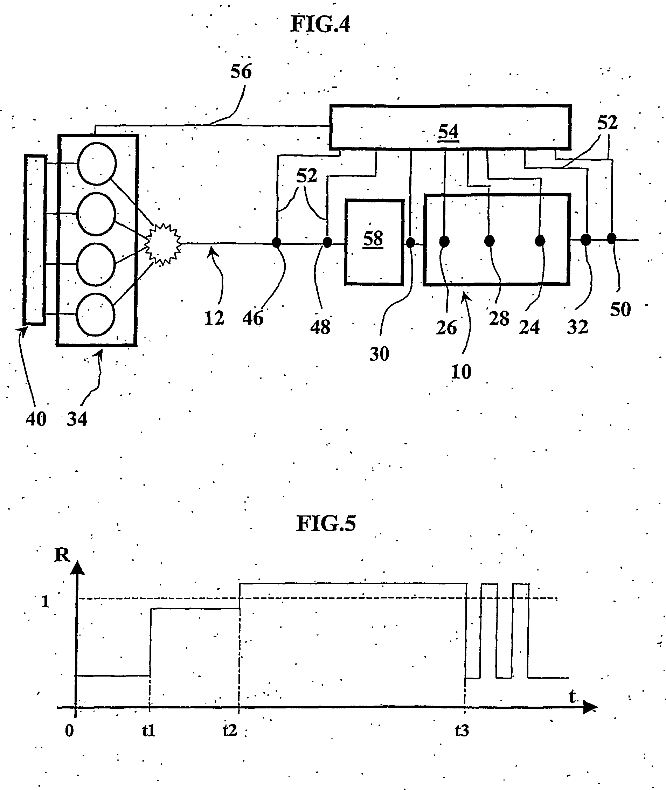

La figure 4 montre une variante du moteur de la figure 2 et pour cela comporté sensiblement les mêmes références.

Dans cette variante, la ligne d'échappement 12 comprend en outre un catalyseur 58 sur lequel s'accumulent des oxydes nitriques, dit piège à NOx.

Ce piège à NOx 58 est situé en amont du filtre à particules 10, en considérant le sens de circulation des gaz d'échappement, et le capteur de pression 48 est placé en amont de ce piège alors que le capteur de température 30 est situé entre le piège 58 et le filtre 10.

Pendant les opérations désulfatation du piège et de régénération du filtre à particules, comme cela est décrit à titre d'exemple dans la demande de brevet français N° 2 825 412, le piège à Noix est traversé par des gaz d'échappement atteignant dés températures très élevées, de l'ordre de 750HC.

A la sortie de ce piège, ces gaz, qui ont gardé sensiblement la même température traversent le, filtre à particules et participent à l'élévation de température du filtre lors de la combustion des particules et suies présentes dans ce filtre. Si l'élévation de températures dépasse un seuil prédéterminé, ce filtre peut être gravement endommage voire détruit

Une regulation de l'exotherme du filtre à particules lors de sa régénération est donc nécessaire pour qu'il garde toute sa capacité de régénération et de conversion dans le cas où ce filtre est catalysé.

Comme précédemment décrit, l'unité de contrôle 54 évalue le taux de colmatage) du filtre 10 grâce à la perte de charge en pression mesurée par les capteurs de pression 48 et 50 et si ce taux atteint une valeur seuil, la séquence de régénération du filtre à particules est enclenchée.

Simultanément et en se rapportant à la figure 5, à l'instant t1, une séquence de désulfatation du piège à NOx est réalisée avec la séquence de régénération du filtre à particules et cela même si le piège à NOx n'a pas atteint un seuil de saturation en soufre.

Lors des séquences de régénération et désulfatation, l'unité de contrôle moteur 54 envoie des instructions aux organes du moteur pour que ce dernier fonctionne en mode de combustion pauvre avec, entre l'instant t1 et t2, une augmentation de la richesse jusqu'à une valeur inférieure à 1, ce qui génère une augmentation de la température des gaz d'échappement jusqu'à environ 450°C. Puis, entre l'instant t2 et t3, le moteur fonctionne en mode riche grâce à une autre augmentation de la richesse au-dessus de 1 pour assurer la désulfatation du piège à NOx au-delà d'une température d'environ 600°C.

A l'instant t3, la désulfatation du piège 22 est réalisée et la température des gaz d'échappement qui sort de ce piège est à un niveau tel que l'unité de contrôle examiner les températures internes des différentes régions du filtre, grâce aux capteurs internes 24, 26 et 28. Si aucune de ces températures internes D'atteint le seuil de température critique, la régénération du filtre se poursuit avec les paramètres définis. Dans le cas contraire, l'unité 54 les organes du moteur par la ligne 56 de manière à ce que la combustion dans le moteur passe en mode riche comme précédemment décrit en relation avec la figure 3

Ainsi, lors de la séquence de régénération du filtre, on retrouvera, à partir de l'instant t3, une succession de mode de combustion riche/pauvre du moteur permettant de contrôler l'exotherme de ce filtre, comme illustré sur la figure 5.

## Revendications

1. Procédé de régénération d'un filtre à particules (10) intégré dans une ligne d'échappement (12) d'un moteur à combustion interne (34), les gaz d'échappement traversant le filtre d'une face d'entrée (16) vers une face de sortie (18), **caractérisé en ce que**, pendant la régénération du filtre,
- on Surveille la température interne d'au moins deux régions du filtre (10),
- on diminue la teneur en oxygène des gaz d'échappement lorsque au moins une des températures surveillées est supérieure à une température critique,
- on! augmente la teneur en oxygène des gaz d'échappement, pour poursuivre la régénération du filtre, lorsque toutes les températures surveillées sont inférieures à la température critique.

2. Procédé de régénération selon la revendication 1, **caractérisé en ce que** l'on surveille la température interne d'une région du filtre (10) proche de sa face d'entrée (16).

3. Procédé de régénération selon la revendication 1 ou 2, **caractérisé en ce que** l'on surveille la température interne d'une région du filtre (10) proche de sa face de sortie (18).

4. Procédé de régénération selon l'une des revendications 1 à 3, **caractérisé en ce que** l'on surveille la température interne d'une région médiane du filtre (10).

5. Procédé de régénération selon l'une des revendications 1 à 4, dans lequel on réalise également une désulfatation d'un piège à NOx (58), **caractérisé en ce que** l'on surveille la température interne d'au moins deux régions du filtre (10) après la désulfatation du piège (58).

6. Procédé de régénération selon la revendication 1, **caractérisé en ce qu'**on diminue la teneur en oxygène des gaz d'échappement par un fonctionnement du moteur en mode riche.

7. Procédé de régénération selon la revendication 1, **caractérisé en ce qu'**on augmente la teneur en oxygène des gaz d'échappement par un fonctionnement du moteur en mode pauvre.

8. Dispositif pour la mise en oeuvre du procédé de régénération d'un filtre à particules (10) selon l'une des revendications précédentes, **caractérisé en ce que** dispositif comprend au moins deux capteurs de température (24, 26, 28) logés à l'intérieur du filtre et connectés à une unité de contrôle (54) commandant la diminution ou l'augmentation de la teneur en oxygène des gaz d'échappement en fonction des températures relevées dans le corps du filtre par lesdits capteurs.

9. Dispositif selon la revendication 8, **caractérisé en ce qu'**un capteur de température (26) est placé au voisinage de la face d'entrée (16) du filtre.

10. Dispositif selon la revendication 8 ou 9, **caractérisé en ce qu'**un capteur de température (24) est placé au voisinage de la face de sortie (18) du filtre.

11. dispositif selon l'une des revendications 8 à 10, **caractérisé en ce qu'**un capteur de température (28) est placé dans une région médiane du filtre

12. Dispositif selon l'une des revendications 8 à 11, **caractérisé en ce que** le filtre à particules (10) comprend des phases catalytiques pour le traitement des polluants contenus dans les gaz d'échappement.

## Claims

1. A method for the regeneration of a particulate filter (10) integrated into an exhaust line (12) of an internal combustion engine (34), the exhaust gases flowing through the filter from an inlet side (16) towards an outlet side (18) ; **characterised in that**, during the regeneration of the filter,
- the internal temperature of at least two regions of the filter (10) is monitored,
- the oxygen content of the exhaust gases is reduced when at least one of the monitored temperatures is greater than a critical temperature,
- the oxygen content of the exhaust gases is increased, in order to carry on with the regeneration of the filter, when all of the monitored temperatures are lower than the critical temperature.

2. The method of regeneration according to Claim 1, **characterised in that** the internal temperature of a region of the filter (10) near its inlet side (16) is monitored.

3. The method of regeneration according to Claim 1 or 2, **characterised in that** the internal temperature of a region of the filter (10) near its outlet side (18) is monitored.

4. The method of regeneration according to one of Claims 1 to 3, **characterised in that** the internal temperature of a middle region of the filter (10) is monitored.

5. The method of regeneration according to one of Claims 1 to 4, wherein a desulfation of a NOx trap (58) is also carried out, **characterised in that** the internal temperature of at least two regions of the filter (10) is monitored after desulfation of the trap (58).

6. The method of regeneration according to Claim 1, **characterised in that** the oxygen content of the exhaust gases is reduced by a rich mode operation of the engine.

7. The method of regeneration according to Claim 1, **characterised in that** the oxygen content of the exhaust gases is increased by a lean mode operation of the engine.

8. A device for implementing the method of regeneration of a particulate filter (10) according to one of the preceding claims, **characterised in that**.the device comprises at least two temperature sensors (24, 26, 28) housed within the filter and connected to a control unit (54) which controls the reduction or the increase of the oxygen content of the exhaust gases according to the temperatures measured in the filter body by said sensors.

9. The device according to Claim 8, **characterised in that** one temperature sensor (26) is located in the vicinity of the inlet side (16) of the filter.

10. The device according to Claim 8 or 9, **characterised in that** one temperature sensor (24) is located in the vicinity of the outlet side (18) of the filter.

11. The device according to one of Claims 8 to 10, **characterised in that** one temperature sensor (28) is located in a middle region of the filter.

12. The device according to one of Claims 8 to 11, **characterised in that** the particulate filter (10) comprises catalytic phases for the treatment of the pollutants contained in the exhaust gases.

## Patentansprüche

1. Verfahren zum Regenerieren eines Partikelfilters (10), das in eine Auspuffanlage (12) eines Verbrennungsmotors (34) eingebaut ist, wobei die Abgase das Filter von einer Eingangsseite (16) zu einer Ausgangsseite (18) durchqueren, **dadurch gekennzeichnet, dass** man während des Regenerierens des Filters
- die Innentemperatur von mindestens zwei Bereichen des Filters (10) überwacht,
- den Sauerstoffgehalt der Abgase verringert, wenn mindestens eine der überwachten Temperaturen größer ist als eine kritische Temperatur,
- den Sauerstoffgehalt der Abgase erhöht, um das Regenerieren des Filters fortzusetzen, wenn alle überwachten Temperaturen niedriger sind als die kritische Temperatur.

2. Regenerierungsverfahren nach Anspruch 1, **dadurch gekennzeichnet, dass** man die Innentemperatur eines Bereichs des Filters (10) in der Nähe seiner Eingangsseite (16) überwacht.

3. Regenerierungsverfahren nach Anspruch 1 oder 2, **dadurch gekennzeichnet, dass** man die Innentemperatur eines Bereichs des Filters (10) in der Nähe seiner Ausgangsseite (18) überwacht.

4. Regenerierungsverfahren nach einem der Ansprüche 1 bis 3, **dadurch gekennzeichnet, dass** man die Innentemperatur eines Mittenbereichs des Filters (10) überwacht.

5. Regenerierungsverfahren nach einem der Ansprüche 1 bis 4, bei dem man auch eine Desulfatierung einer Noₓ-Falle (58) ausführt, **dadurch gekennzeichnet, dass** man die Innentemperatur von mindestens zwei Bereichen des Filters (10) nach der Desulfatierung der Falle (58) überwacht.

6. Regenerierungsverfahren nach Anspruch 1, **dadurch gekennzeichnet, dass** man den Sauerstoffgehalt der Abgase durch ein Funktionieren des Motors im fetten Bereich verringert.

7. Regenerierungsverfahren nach Anspruch 1, **dadurch gekennzeichnet, dass** man den Sauerstoffgehalt der Abgase durch ein Funktionieren des Motors im mageren Bereich erhöht.

8. Vorrichtung zum Umsetzen des Regenerierungsverfahrens eines Partikelfilters (10) nach einem der vorhergehenden Ansprüche, **dadurch gekennzeichnet, dass** die Vorrichtung mindestens zwei Temperatursensoren (24, 26, 28) aufweist, die im Inneren des Filters untergebracht und an eine Steuereinheit (54) angeschlossen sind, die das Verringern oder Erhöhen des Sauerstoffgehalts der Abgase in Abhängigkeit von den Temperaturen, die in dem Körper des Filters von den Sensoren erfasst werden, steuert.

9. Vorrichtung nach Anspruch 8, **dadurch gekennzeichnet, dass** ein Temperatursensor (26) in der Nähe der Eingangsseite (16) des Filters platziert ist.

10. Vorrichtung nach Anspruch 8 oder 9, **dadurch gekennzeichnet, dass** ein Temperatursensor (24) in der Nähe der Ausgangsseite (18) des Filters platziert ist.

11. Vorrichtung nach einem der Ansprüche 8 bis 10, **dadurch gekennzeichnet, dass** ein Temperatursensor (28) in einem Mittenbereich des Filters platziert ist.

12. Vorrichtung nach einem der Ansprüche 8 bis 11, **dadurch gekennzeichnet, dass** das Partikelfilter (10) katalytische Phasen für die Behandlung der in den Abgasen enthaltenen Verschmutzungen aufweist.
